(19) Europäisches Patentamt / European Patent Office / Office européen des brevets

(11) **EP 2 842 727 B1**

(12) **EUROPÄISCHE PATENTSCHRIFT**

(45) Veröffentlichungstag und Bekanntmachung des Hinweises auf die Patenterteilung:
**12.10.2022   Patentblatt 2022/41**

(21) Anmeldenummer: **14002957.0**

(22) Anmeldetag: **26.08.2014**

(51) Internationale Patentklassifikation (IPC):
*B29C 70/40* (2006.01)    *B32B 5/22* (2006.01)
*B29C 70/08* (2006.01)    *G10K 11/168* (2006.01)
*B32B 5/02* (2006.01)    *B32B 27/12* (2006.01)
*B32B 27/20* (2006.01)    *B32B 27/36* (2006.01)
*B32B 27/38* (2006.01)

(52) Gemeinsame Patentklassifikation (CPC):
**B29C 70/08; B29C 70/40; B32B 5/024;**
**B32B 27/12; B32B 27/20; B32B 27/36;**
**B32B 27/38; G10K 11/168;** B32B 2260/021;
B32B 2260/046; B32B 2262/0284; B32B 2262/106;
B32B 2307/102

(54) **Verfahren zur Herstellung eines faserverstärktes Verbundbauteils**

Method of producing a fibre-reinforced composite component

Procédé de fabrication d'un composant composite renforcé de fibres

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2013   DE 102013014411**

(43) Veröffentlichungstag der Anmeldung:
**04.03.2015   Patentblatt 2015/10**

(73) Patentinhaber: **Sandler AG**
**95126 Schwarzenbach/Saale (DE)**

(72) Erfinder:
• **Herrmann, Stefan**
**95182 Döhlau (DE)**

• **Oertel, Harald**
**95361 Ködnitz (DE)**

(74) Vertreter: **Grünecker Patent- und Rechtsanwälte PartG mbB**
**Leopoldstraße 4**
**80802 München (DE)**

(56) Entgegenhaltungen:
**US-A- 5 068 001**      **US-A1- 2004 055 813**
**US-A1- 2005 217 932**      **US-A1- 2009 202 826**
**US-B1- 6 204 209**

EP 2 842 727 B1

**Beschreibung**

Die vorliegende Erfindung betrifft ein Verfahren zur Herstellung eines faserverstärkten Verbundbauteils gemäß dem Oberbegriff des Anspruches 1.

Faserverstärkte Kunststoffe gehören seit langem zum Stand der Technik. Auch ist es bereits bekannt, zwischen zwei Faserlagen eine zusätzliche Schicht einzubringen. Vor allem im Automobil- und Fahrzeugbau werden solche Faserverbundwerkstoffe als sogenannte Organobleche verwendet.

Die DE7727940 offenbart eine Verbundwerkstoff in Sandwich-Bauweise, der im wesentlichen aus zwei widerstandfähigen, dünnen Deckschichten und mindestens einer kunstharzimprägnierten Mittellage besteht. Dabei besteht die Mittellage aus mindestens einer saugfähigen Filz- oder Vliesschicht mit netz- oder gitterartiger Struktur oder lochartigen Aussparungen, wobei diese Schicht einschließlich des Netzwerkes bzw. der Aussparungen mit einer pastösen, härtbaren Kunstharzmasse und gegebenenfalls geeigneten Füllstoffen geringer Dichte imprägniert bzw. ausgefüllt ist. Die lochartigen Aussparungen werden dabei in den Vliesstoff gestanzt, was höhere Herstellungskosten und mehr Ausschuss zur Folge hat.

Die DE202007003209 offenbart ein Mehrlagenlaminatmaterial für Platten und Formkörper aus faserverstärktem Kunststoff mit mindestens einer Faserlage und mindestens einer Zusatzlage, die aus einem im Wesentlichen gleichmäßigem Gewirke besteht. Das offenbarte Mehrlagenlaminat soll durch das Gewirk im Falle eines Bruches ein Auseinandersplittern verhindern und die Bruchteile zusammenhalten. Nachteilig ist jedoch, dass ein Gewirk wegen seines dreidimensionalen Flechtwerks, hohe Herstellungskosten hat. Zum variieren der Dicke wird ein abwechselnder Aufbau von Faserlagen und Gewirk vorgeschlagen, wodurch die Herstellungskosten durch die eingeschobenen Faserlagen abhängig von der Dicke des gewünschten Bauteils unnötig ansteigen.

Die DE3934555 offenbart einen faserverstärkten Kunststoff für Karosserieteile bei Kraftfahrzeugen, mit einem maximal 2 mm dicken Aufbau, einer mittigen Schicht aus durchgehender Kunststoff-Faserarmierung in Form von Geweben, Gelegen, Vliesen, Filz und/oder Gestrick und mindestens zwei jeweils auf Ober- und Unterseite der mittigen Schicht angeordneten Tragschichten aus Carbon-Faserarmierung, wobei gegebenenfalls jeweils eine weitere Schicht zwischen der Kernschicht und den Tragschichten aus Metallfolie oder einem Metallfaser-Vlies, -Gewebe, -Gestrick, -Gewirk, -Gelege, sowie jeweils ein Oberflächenvlies, Fein-Gewebe, -Gestrick, -Gewirk, -Gelege oder -Geflecht auf der Außenseite der Tragschichten vorgesehen ist. Das Ausführungsbeispiel beschreibt, dass die übereinander angeordneten Lagen bei einer Temperatur von 80°C für 30 Minuten ohne Pressen in ein Werkzeug eingelegt werden und währenddessen das Harz injiziert wird. Das Ausführungsbeispiel beschreibt weiter ein besonders ausgebildetes Gelege als Mittelschicht, welches Hohlräume ausbildet, die zur weiteren Gewichtsreduzierung mit Hohlkugeln aus Phenolharz gefüllt sind. In diesem Ausführungsbeispiel zeigt das fertige Bauteil kein gutes Bruchverhalten, da die mittlere Schicht keine ausreichende Verbindung mit den Trageschichten eingehen kann, um ein Splittern zu verhindern.

Ein Verbundbauteil hergestellt durch ein Verfahren gemäß dem Oberbegriff des Anspruchs 1 wird beispielsweise von der US 6,204,209 B1 und der US 2005/217932 A1 offenbart.

Es ist die Aufgabe der vorliegenden Erfindung, ein faserverstärktes Verbundbauteil herzustellen, welches sich kostengünstig herstellen lässt und dabei leichter ist als herkömmliche Kunststoffverbundbauteile sowie ein besseres Bruchverhalten und gute akustische und Körperschall absorbierende Dämmwirkung zeigt.

Die Aufgabe wird gelöst durch die Merkmale des Anspruchs 1.

Ein erfindungsgemäßes Verfahren zur Herstellung eines faserverstärkten Verbundbauteils liegt vor, wenn zur Herstellung dieses Bauteils, das zumindest drei Schichten aufweist, umfassend zumindest eine Kernschicht aus textilem Material und mindestens eine obere und mindestens eine untere Deckschicht, wobei die Kernschicht ein Vlies aus natürlichen oder synthetischen Fasern oder einer Mischung aus beidem ist, die obere und untere Deckschicht sowie die Kernschicht so angeordnet werden, dass die Kernschicht zwischen den beiden Deckschichten liegt. Vordem Pressen wird das Harz zwischen die einzelnen Schichten eingebracht.

Der fertige Schichtaufbau wird nun gepresst und die Kernschicht wird komprimiert, womit eine Reduzierung der Dicke des Vlieses gemeint ist, die über das Zusammenziehen des Vlies beim Einbringen des Harzes hinausgeht. Beim Pressen dringt das Harz in die Deckschicht und die Kernschicht ein und stellt eine optimale Verbindung zwischen den Deckschichten und der Kernschicht her.

Erfindungsgemäß bestehen die obere Deckschicht und die untere Deckschicht aus kohlenstofffaserverstärktem Kunststoff, wobei die obere Deckschicht und/oder die untere Deckschicht aus mehreren Lagen bestehen, die mit Harz miteinander verbunden sind. Dadurch können die mechanischen Eigenschaften des Bauteils an die jeweiligen Anforderungen angepasst werden.

Ebenfalls erfindungsgemäß wird das Vlies beim Pressen so komprimiert, dass seine Dicke im Verbundbauteil zwischen 5 % und 50 %, besonders bevorzugt zwischen 5 % und 20 % der Dicke vor dem Pressen beträgt. In diesem Bereich blieben die akustischen und Körperschall absorbierenden Dämmwirkungen des Vlies erhalten bei einer möglichst geringen Dicke des gesamten Verbundbauteils.

Vorteilhafte Ausgestaltungen der vorliegenden Erfindung sind Gegenstand der Unteransprüche.

In einer bevorzugten Ausführungsform liegt die Temperatur beim Pressen im Bereich von 180°C bis 220°C und der Pressdruck im Bereich von 100 bar und 120 bar.

In einer weiteren bevorzugten Ausführungsform liegen die kohlefaserverstärkten Kunststoffe als ein Mitglied der Gruppe, umfassend Gewebe, Gelege, Maschenware und Vlies, vor.

In einer besonders bevorzugten Ausführungsform liegen die kohlefaserverstärkten Kunststoffe als Gewebe mit einem Flächengewicht von 90 g/m2 bis 200 g/m2 und einer Dicke von 0,08 mm bis 0,30 mm vor.

In einer weiteren bevorzugten Ausführungsform besteht das Vlies aus PET und liegt vor der Verarbeitung als Matte mit einem Flächengewicht von 350 g/m2 bis 1000 g/m2 , einer Dicke zwischen 5 mm und 20 mm und einer Porosität von über 90 % vor. Mit diesen Parametern lässt sich mit dem Harz eine besonders stabile Verbindung zwischen der Deck-schicht und dem Vlies herstellen.

In einer weiteren bevorzugten Ausführungsform werden die obere und/oder die untere Deckschicht aus mehreren Lagen aufgebaut, indem die einzelnen Lagen übereinander angeordnet werden und zwischen den Lagen das Harz eingebracht wird.

In einer weiteren bevorzugten Ausführungsform wird das Anordnen der einzelnen Schichten, das Einbringen des Harz und das Pressen in einem Arbeitsschritt durchgeführt. Die das Bauteil bildenden Lagen werden dabei in einem Arbeitsschritt zum fertigen Bauteil miteinander verbunden, wodurch die Produktionszeit reduziert wird.

In einer weiteren bevorzugten Ausführungsform wird das Vlies vor dem Pressen mit Harz getränkt und ein sogenanntes Prepreg gebildet, welches anschließend mit den Deckschichten verpresst wird. Dadurch vereinfacht sich die Verarbeitung und die Harzmenge lässt sich gut kontrollieren.

Nachfolgend werden ein faserverstärktes Verbundbauteil und verschiedene Ausführungsbeispiele des Verbundbauteils beschrieben, das nach einem wie zuvor beschrieben Verfahren hergestellt worden ist.

Durch die Kernschicht aus Vlies reduziert sich das Gewicht des Bauteils gegenüber herkömmlichen Faserverbundbauteilen. Außerdem lassen sich vor allem bei dickeren Bauteilen die Produktionskosten stark reduzieren, da nur für die Deckschichten die hochwertigeren und teureren kohlenstofffaserverstärkten Kunststoffe benötigt werden. Durch die Verbindung der Kernschicht aus Vlies mit den Deckschichten verbessert sich auch das Bruchverhalten, da die Deckschichten nicht mehr scharfkantig absplittern, sondern nur stumpf brechen. Des Weiteren weist ein erfindungsgemäßes Bauteil gute akustische und Körperschall absorbierende Dämmwirkung auf, so dass im späteren Verarbeitungsprozess keine separate Dämmschicht aufgebracht werden muss. Dadurch können weitere Herstellungskosten eingespart werden.

Dabei bestehen die obere Deckschicht und die untere Deckschicht aus kohlenstofffaserverstärktem Kunststoff, wobei die obere Deckschicht und/oder die untere Deckschicht aus mehreren Lagen bestehen, die mit Harz miteinander verbunden sind.

Vorzugsweise besteht das Vlies aus Polyester. Solche Vliese lassen sich sehr kostengünstig herstellen.

Vorzugsweise besteht das Vlies aus Polyethylenterephtalat (PET), da sich ein solches Vlies einfach verarbeiten und verformen lässt.

Bevorzugt hat das komprimierte Vlies eine Porosität zwischen 50 % und 95 %, sodass sich eine gute akustische und Körperschall absorbierende Dämmwirkung ergibt.

Die Porosität ist ein Maß für das Verhältnis von Holhraumvolumen zu Gesamtvolumen eines Stoffes oder Stoffgemisches und berechnet sich aus dem Flächengewicht FG, der Dicke d und der Dichte des Vlies gemäß:

$$\Phi = (1 - (\frac{FG}{d * \rho})) * 100\%$$

Vorzugsweise ist das Harz ein Harz aus der Gruppe, umfassend Epoxydharz, ungesättigtes Polyesterharz und Vinylesterharz. Diese Harze sind besonders gut zur Verbindung der einzelnen Schichten geeignet.

Weiter vorzugsweise hat das faserverstärkte Verbundbauteil einen Harzanteil zwischen 20 % und 60 %, besonders bevorzugt zwischen 25% und 55%, womit sich ein besonders gutes Bruchverhalten erzielen lässt.

Zur näheren Erläuterung der vorliegenden Erfindung wird im Nachfolgenden ein Ausführungsbeispiel anhand der beigefügten Zeichnungen beschrieben. Es zeigen:

Fig. 1: Schematisch Darstellung des Schichtaufbaus eines erfindungsgemäß hergestellten faserverstärkten Verbundbauteils vor dem Pressen, und

Fig. 2: Schematische Darstellung eine erfindungsgemäß hergestellten faserverstärkten Verbundbauteils.

Für die folgenden Ausführungen gilt, dass gleich Teile durch gleiche Bezugszeichen bezeichnet werden. Sofern in einer Zeichnung Bezugszeichen enthalten sind, auf die in der zugehörigen Figurenbeschreibung nicht näher eingegangen wird, so wird auf vorangehende oder nachfolgende Figurenbeschreibungen Bezug genommen.

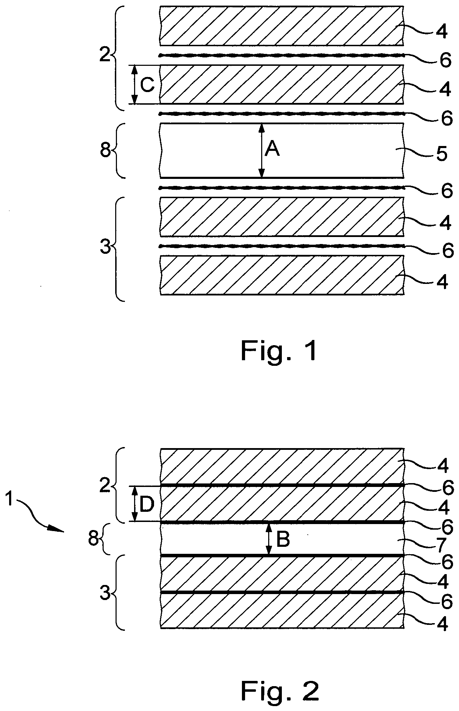

Der in Fig. 1 dargestellte Schichtaufbau vor dem Pressen zum Verbundbauteil (1) umfasst eine obere Deckschicht (2) und eine untere Deckschicht (3), die in der dargestellten Ausführungsform jeweils aus zwei Lagen aus kohlenstofffaserverstärktem Kunststoff (4) bestehen, sowie ein Vlies (5) aus PET als Kernschicht (8).

Zwischen den Lagen ist ein Epoxydharz (6) eingebracht, welches die einzelnen Lagen miteinander verbindet.

Im Ausführungsbeispiel wurde ein Vlies (5) der Firma Sandler AG mit der Bezeichnung Sawaform 3077 verwendet. Es besitzt ein Flächengewicht von 600 g/m², eine Dicke (A) von 9,5 mm sowie eine Porosität vor dem Verpressen von 95 %.

Die verwendeten Lagen aus kohlenstofffaserverstärktem Kunststoff (4) der Firma Lange und Ritter mit der Bezeichnung Style 469 besitzen jeweils ein Flächengewicht von 93 g/m² und eine Dicke (C) von 0,15 mm.

Im Ausführungsbeispiel wurde als Harz (6) das Epoxydharz EPIKOTE Resin MGS LR285 der Firma Lange und Ritter zusammen mit dem Epoxid-Härter LARIT 285 - blau der Firma Lange und Ritter verwendet in einem Mischungsverhältnis Harz zu Härter von 100 zu 40.

Durch das beschriebene Verfahren entsteht aus dem in Fig. 1 dargestellten Schichtaufbau, das in Fig. 2 dargestellte erfindungsgemäße faserverstärkte Verbundbauteil (1). Im Ausführungsbeispiel wurde bei einer Temperatur von etwa 200° C für 3 Minuten bei einem Druck von 110 bar gepresst. Das dargestellte Verbundbauteil (1) umfasst eine obere Deckschicht (2) und eine untere Deckschicht (3), die in der dargestellten Ausführungsform jeweils aus zwei Lagen kohlenstofffaserverstärktem Kunststoff (4) bestehen, sowie ein komprimiertes Vlies (7) aus PET als Kernschicht (8). Das Epoxydharz (6) verbindet die einzelnen Schichten miteinander. Im getränkten Zustand haben die Lagen aus kohlenstoff-faserverstärktem Kunststoff (4) eine Dicke (D) von 0,10 mm. Das komprimierte PET-Vlies (7) hat nach dem Pressen eine Dicke (B) von 1 mm, was 10,5 % seiner ursprünglichen Dicke (A) entspricht, und eine Porosität von 56,2 %. Der Harzanteil beträgt in der dargestellten Ausführungsform 25 % bis 55 %.

## Patentansprüche

1. Verfahren zur Herstellung eines faserverstärkten Verbundbauteils (1), das zumindest drei Schichten aufweist, umfassend zumindest eine Kernschicht (8) aus textilem Material und mindestens eine obere und mindestens eine untere Deckschicht (2, 3), wobei die Kernschicht (8) ein Vlies (5, 7) aus natürlichen oder synthetischen Fasern oder einer Mischung aus beidem ist, umfassend die Schritte:

   - Anordnen der Deckschichten (2, 3) und der Kernschicht (8) übereinander sodass die Kernschicht (8) zwischen den Deckschichten (2, 3) liegt,,
   - Einbringen eines Harzes (6) zwischen den einzelnen Schichten,
   - Pressen der Schichten bei erhöhtem Druck und erhöhter Temperatur und komprimieren der Kernschicht (8) zu einem komprimierten Vlies (7)

   **dadurch gekennzeichnet, dass** die Deckschichten (2, 3) aus kohlenstofffaserverstärktem Kunststoff bestehen, wobei die obere und/oder die untere Deckschicht (2, 3) aus mehreren Lagen (4) bestehen, die mit Harz (6) miteinander verbunden sind und dass die Kernschicht (8) beim Pressen der Schichten derart komprimiert wird, dass die Dicke (B) des komprimierten Vlieses (7) im faserverstärkten Verbundbauteil (1) zwischen 5 % und 50 % der Dicke (A) des Vlieses (5) vor dem Pressen beträgt.

2. Verfahren zur Herstellung eines faserverstärkten Verbundbauteils (1) nach Anspruch 1, **dadurch gekennzeichnet, dass** der Pressdruck zwischen 100 bar und 120 bar liegt und die Temperatur zwischen 180 °C und 220 °C beträgt.

3. Verfahren zur Herstellung eines faserverstärkten Verbundbauteils (1) nach einem der Ansprüche 1 und 2, **dadurch gekennzeichnet, dass** der kohlenstofffaserverstärkte Kunststoff (4) vor der Verarbeitung vorliegt als ein Mitglied der Gruppe, umfassend Gelege, Gewebe, Maschenware und Vlies.

4. Verfahren zur Herstellung eines faserverstärkten Verbundbauteils (1) nach Anspruch 3, **dadurch gekennzeichnet, dass** der kohlenstofffaserverstärktke Kunststoff (4) vor der Verarbeitung als Gewebe vorliegt mit einem Flächengewicht von 90 g/m² bis 200 g/m² und einer Dicke (C) von 0,08 mm bis 0,30 mm.

5. Verfahren zur Herstellung eines faserverstärkten Verbundbauteils (1) nach einem der Ansprüche 1 bis 4, **dadurch gekennzeichnet, dass** das Vlies (5, 7) aus Polyethylenterephthalat besteht und vor der Verarbeitung als Matte mit einem Flächengewicht von 350 g/m² bis 1000 g/m², einer Dicke (A) zwischen 5 mm und 20 mm und einer Porosität von über 90% vorliegt.

6. Verfahren zur Herstellung eines faserverstärkten Verbundbauteils (1) nach einem der Ansprüche 1 bis 5, **dadurch gekennzeichnet, dass** die obere und/oder die untere Deckschicht (2, 3) aus mehreren Lagen (4) bestehen, die vor dem Einbringen des Harzes (6) zwischen die Lagen (4) übereinander angeordnet werden.

7. Verfahren zur Herstellung eines faserverstärkten Verbundbauteils (1) nach einem der Ansprüche 1 bis 6, **dadurch gekennzeichnet, dass** das Anordnen der Kernschicht (8) zwischen der oberen und der unteren Deckschicht (2, 3), das Einbringen des Harzes (6) und das Pressen in einem Arbeitsschritt durchgeführt werden.

**8.** Verfahren zur Herstellung eines faserverstärkten Verbundbauteils (1) nach einem der Ansprüche 1 bis 7, **dadurch gekennzeichnet, dass** das Vlies (5) vor dem Pressen mit dem Harz (6) getränkt wird.

## Claims

**1.** A method for manufacturing a fiber-reinforced composite component (1) including at least three layers comprising at least one core layer (8) made of textile material and at least one upper cover layer and at least one lower cover layer (2, 3), wherein the core layer (8) is a nonwoven (5, 7) of natural or synthetic fibers or a mixture of both, comprising the following steps:

- placing the cover layers (2, 3) and the core layer (8) on top of each other so that the core layer (8) is sandwiched between the cover layers (2, 3),
- introducing a resin (6) between the individual layers,
- pressing the layers at elevated pressure and elevated temperature and compressing the core layer (8) to form a compressed nonwoven (7),

**characterized in that** the cover layers (2, 3) consist of carbon-fiber reinforced plastic, wherein the upper cover layer and/or the lower cover layer (2, 3) consist of a plurality of individual layers (4) bonded with resin (6), and **in that** the core layer (8) is compressed during pressing of the layers so that the thickness (B) of the compressed nonwoven (7) in the fiber-reinforced composite component (1) is between 5 % and 50 % of the thickness (A) of the nonwoven (5) before pressing.

**2.** The method for manufacturing a fiber-reinforced composite component (1) according to claim 1, **characterized in that** during pressing the pressure is between 100 bar and 120 bar and the temperature is between 180 °C and 220 °C.

**3.** The method for manufacturing a fiber-reinforced composite component (1) according to one of claims 1 and 2, **characterized in that** the carbon-fiber reinforced plastic (4) before processing is a material belonging to the group consisting of non-crimped fabric, woven fabric, knitted fabric and nonwoven fabric.

**4.** The method for manufacturing a fiber-reinforced composite component (1) according to claim 3, **characterized in that** the carbon-fiber reinforced plastic (4) before processing is a fabric having a weight per unit area from 90 g/m$^2$ to 200 g/m$^2$ and a thickness (C) from 0.08 mm to 0.30 mm.

**5.** The method for manufacturing a fiber-reinforced composite component (1) according to any one of claims 1 to 4, **characterized in that** the nonwoven (5, 7) is made of polyethylene terephthalate and before processing is a mat having a weight per unit area from 350 g/m$^2$ to 1000 g/m$^2$, a thickness (A) between 5 mm and 20 mm, and a porosity of more than 90 %.

**6.** The method for manufacturing a fiber-reinforced composite component (1) according to any one of claims 1 to 5, **characterized in that** the upper cover layer and/or the lower cover layer (2, 3) consist of a plurality of individual layers (4) which are placed on top of each other before the resin (6) is introduced between the layers (4).

**7.** The method for manufacturing a fiber-reinforced composite component (1) according to any one of claims 1 to 6, **characterized in that** sandwiching the core layer (8) between the upper and lower cover layers (2, 3), introducing the resin (6) and pressing are carried out in one step.

**8.** The method for manufacturing a fiber-reinforced composite component (1) according to any one of claims 1 to 7, **characterized in that** the nonwoven (5) is impregnated with the resin (6) before pressing.

## Revendications

**1.** Procédé de fabrication d'un composant composite renforcé par des fibres (1) présentant au moins trois couches et comprenant au moins une couche centrale (8) en matière textile et au moins une couche superficielle supérieure et au moins une couche superficielle inférieure (2, 3), dans lequel la couche centrale (8) est un non-tissé (5, 7) constitué de fibres naturelles ou synthétiques ou d'un mélange des deux, comprenant les étapes consistant à :

- agencer les couches superficielles (2, 3) et la couche centrale (8) de manière superposée de sorte que la couche centrale (8) se trouve entre les couches superficielles (2, 3),
- introduire une résine (6) entre les couches individuelles,
- presser les couches avec une pression et une température élevées et compresser la couche centrale (8) afin d'obtenir un non-tissé compressé (7)

**caractérisé en ce que** les couches superficielles (2, 3) sont constituées de matière plastique renforcée par des fibres de carbone, dans lequel les couches superficielles supérieure et/ou inférieure (2, 3) sont constituées de plusieurs couches (4) reliées entre elles par de la résine (6) et **en ce que** la couche centrale (8) est comprimée lors du pressage des couches de telle manière que l'épaisseur (B) du non-tissé (7) comprimé représente, au sein de l'élément composite renforcé par des fibres (1), entre 5 % et 50 % de l'épaisseur (A) du non-tissé (5) avant le pressage.

2. Procédé de fabrication d'un composant composite renforcé par des fibres (1) selon la revendication 1, **caractérisé en ce que** la pression de compression est comprise entre 100 bar et 120 bar et la température est comprise entre 180°C et 220°C.

3. Procédé de fabrication d'un composant composite renforcé par des fibres (1) selon la revendication 1 ou 2, **caractérisé en ce que** la matière plastique renforcée par des fibres de carbone (4) est présente avant le traitement sous forme de matière appartenant au groupe des étoffes, tissus, tricots et non-tissés.

4. Procédé de fabrication d'un composant composite renforcé par des fibres (1) selon la revendication 3, **caractérisé en ce que** la matière plastique renforcée par des fibres de carbone (4) est présente avant le traitement sous forme de tissu avec un grammage compris entre 90 g/m$^2$ et 200 g/m$^2$ et une épaisseur (C) comprise entre 0,08 mm et 0,30 mm.

5. Procédé de fabrication d'un composant composite renforcé par des fibres (1) selon l'une quelconque des revendications 1 à 4, **caractérisé en ce que** le non-tissé (5, 7) est constitué de polyéthylène téréphtalate et est présent avant le traitement sous forme de mat avec un grammage compris entre 350 g/m$^2$ et 1 000 g/m$^2$, une épaisseur (A) comprise entre 5 mm et 20 mm et une porosité supérieure à 90%.

6. Procédé de fabrication d'un composant composite renforcé par des fibres (1) selon l'une quelconque des revendications 1 à 5, **caractérisé en ce que** la couche superficielle supérieure et/ou la couche superficielle inférieure (2, 3) est/sont constituée(s) de plusieurs couches (4) qui sont agencées de manière superposée avant l'introduction de la résine (6) entre les couches (4).

7. Procédé de fabrication d'un composant composite renforcé par des fibres (1) selon l'une quelconque des revendications 1 à 6, **caractérisé en ce que** les étapes d'agencement de la couche centrale (8) entre les couches superficielles supérieure et inférieure (2, 3), d'introduction de la résine (6) et de pressage sont mises en œuvre lors d'une seule étape de travail.

8. Procédé de fabrication d'un composant composite renforcé par des fibres (1) selon l'une quelconque des revendications 1 à 7, **caractérisé en ce que** le non-tissé (5) est imprégné avec la résine (6) avant le pressage.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 7727940
- DE 202007003209
- DE 3934555
- US 6204209 B1
- US 2005217932 A1